# EUROPEAN PATENT APPLICATION

(11) **EP 2 905 732 A1**
(43) Date of publication of application: **12.08.2015**
(21) Application number: 15153250.4
(22) Date of filing: 30.01.2015
(51) Int. Cl.: G06Q 10/10

(54) **Method and computer systems for organizing an event**

(30) Priority: 07.02.2014 US 201461937042 P
(71) Applicant: Planza BVBA, 9100 Sint-Niklaas (BE)
(72) Inventor: Desmet, Wouter, 9250 Waasmunster (BE); De Smet, Jeroen, 9111 Belsele (BE)
(74) Representative: LC Patents

(57) **Abstract**

The invention relates to (computer implemented) methods for computer assisted organizing of an event to be attended by a plurality of attendees, user interfaces for such methods, related software and storage media for such software, use of such methods, user interfaces and software, and the underlying computer systems thereof, more in particular a (computer implemented) method for computer assisted organizing of an event to be attended by a plurality of attendees, the method comprising at the side of one of said attendees the steps of: upon receipt by one or more electronic means, linked to said potential attendee of such event, one or more of dates and a plurality of places for such events; (1) inputting on one of said electronic means a first vote related to said one or more dates; (2) inputting on one of said electronic means a second vote related to said places; and (4) transmitting said first and second votes to an electronic system, for at least in part automated determining a selection of said dates and places based on said first and second votes.

## Description

### Field of the invention

The invention relates to (computer implemented) methods for computer assisted organizing of an event to be attended by a plurality of attendees, user interfaces for such methods, related software and storage media for such software, use of such methods, user interfaces and software, and the underlying computer systems thereof.

### Background of the invention

Sooner or later, we all find ourselves in a situation where we want to arrange an (social) event (or meeting or the like) with a group of friends/acquaintances/colleagues, whether in a professional context or outside it. A family dinner at a restaurant, a weekend at the beach with friends or a client meeting..., they are all examples of occasions where a common date and/or location need to be set. An event member's (or organizers) initial, not entirely successful approach will be to phone (or e-mail) the different event members (or participants). It goes without saying that this can become a highly complex task as the number of event members increases. A more effective approach will be to use an existing application to set the date which was specifically designed for this purpose. The first such application we think of is the web tool www.doodle.com, the most popular one in the Benelux. Doodle is a very useful tool to help you set a day/time, even when the number of event members is high. But how are the practical arrangements for e.g. a weekend at the beach with friends made? Once again, we are back to the traditional ways of planning, i.e. (physically) meeting with all event members, various telephone calls, endless e-mail conversations, searching through a thousand and one websites to rent an apartment, etc. In short, this way planning is highly inefficient, it costs each event member a lot of time and it causes quite a bit of stress.

As described above known (computer implemented) method for computer assisted organizing of an event to be attended by a plurality of attendees is a method used for showing to potential attendees of such event a plurality of dates for such events combined with a possibility for such potential attendees to vote (to indicate their availability at those one or more dates for the event or just their preference for one or more dates for the event) so an event member can finally make a (optionally also computer assisted) decision for the date of the event.

While the above known method is quite popular, one must admit that the offered service is rather limited.

US 8428561 describes a system and method for notifying an event in an automated fashion to contacts of a user, especially based on frequency of communication between the user and such contacts, more in particular with the possibility to modify the event, e.g. the date, by the notified party without permission of the requester, to thereby ultimately organize the event by the user's social network or community. While broadcasting an event is obviously interesting to obtain feedback, the automated fashion might rapidly lead to chaos and a non-converging event organization as it remains entirely in the hands of the involved parties to change and change again without any support from the underlying system and methods.

### Aim of the invention

It is the aim of the invention to provide (computer implemented) methods, user interfaces and the like for computer assisted organizing of an event to be attended by a plurality of attendees with much more intelligent services.

### Summary of the invention

It is a first aspect of the invention to provide a (computer implemented) method for computer assisted organizing of an event to be attended by a plurality of attendees by showing to potential attendees of such event a plurality of dates and a plurality of places for such events combined with a possibility for such potential attendees to deliver a first vote (to indicate their availability at those one or more dates for the event or just their preference for one or more dates for the event) and to deliver a second vote (to indicate their reachability of those one or more places for the event or just their preference for one or more of such places for the event) so an event member can finally make a (optionally also computer assisted) decision of the date and place of the event.

Contrary to US 8428561, the invention describes a system and method related to events, more in particular event organization, and may use steps of notifying an event in an automated fashion, be it, in a predetermined manner, hence upon purposely selection of the event organizer or other designated (by the event organizer) persons, and foresees the possibility to modify the event, be it, in a particular way, by providing information on availability on one or more dates and being interested in one or more locations (providing a vote), finally the system and method provides support for the user's social network or community (who might get imported as event members of the events) by collecting and processing the votes and distributing the final outcome (the data and place of the event). As such the invented system and method does require handling of more complex data structures, involving date and location couples and a storing of plurality of votes and decision methods operating thereon.

In an embodiment of this invention the ability to enter places is enhanced by use of other computer implemented methods for displaying places on a map.

While a state of the art data voting methods defines either implicit or explicit two levels of users, being an event member and the potential attendees, the above provided data and place vote method, allows for combinations as indeed while an event member will preferably still provide the list of dates, he may request from all or just a subset of potential attendees suggestions for potential places, thereby creating a hierarchy of privileges between the users. Therefore in an embodiment of the (computer implemented) method for computer assisted organizing of an event to be attended by a plurality of attendees, input means for an event member to assign such privileges and further input means for such privileged users to actually input they suggestions must be foreseen and the method must be adapted to display all those places (optionally after a confirmation check by an event member) and to enable voting on those too.

It is a further embodiment of this invention to provide a (computer implemented) method for computer assisted organizing of an event to be attended by a plurality of attendees by showing to potential attendees of such event besides a plurality of dates and a plurality of places one or more activities being able to be performed during such events, again with a possibility to deliver one of those (optionally after a confirmation check by an event member) a vote. The above mentioned embodiments to allow a subset of users (possibly even another subset than for adding locations) to add activities can also be used here.

In an even more preferred embodiment of the above, the ability of having the combined information of place and data, and the possible link to other computer implemented methods as described above is exploited, to provide automatically one or more activities (as those available at those locations or in the neighborhood) at those dates, preferably supplemented by those added by the allowed subset of users, at least an event member.

In an alternative embodiment, the providing to one or more electronic means, linked to said potential attendees of such event, one or more of dates and a plurality of places for such events, is invoked by a (simple) request (for instance using a code of an activity) of such potential attendee, in that such potential attendee can subscribe to one or more activities, becoming part of the events, to which one or more of dates and a plurality of places are linked (date when and place where such activity can occur).

It is a second aspect of the invention to provide suitable a user interface for use with such method, in that such user interface, must besides being able to input dates (by an event member) and to receive votes for dates (by the potential attendees, including an event member - either implicit or explicit), also support the ability to input places (by at least an event member) and to receive votes for such places (by the potential attendees, including an event member - either implicit or explicit). Preferably such user interfaces are adapted for use on a plurality of devices and browsers (fixed or portable computers, tablets, mobile devices) and even more preferably such user interfaces automatically adapt their design to the available screen of the (wired or wireless) device used to execute a portion of the method (for instance to vote). In embodiments where between the event members more difference are drawn like event organizers (defining a crew) or attendees (even depending on their voting privileges), a multitude of different user interfaces (although they may all be derived from the same basis) must be provided. Moreover in a preferred embodiment where a subset of users is also allowed by an event member to add suggestions for places, a dedicated user interface allowing for this must be provided while the others get to see the standard user interface.

In an embodiment of the invention the user interface also supports the ability to input activities to be performed at the event by one or more of the users and/or show a plurality of activities of which part may be automatically generated.

In a third aspect of the invention methods and user interfaces for providers of places (locations) and/or activities are provided, enabling those to feed the engine, supporting the methods of the first aspect of the invention, to thereby enable automated booking of those locations and/or to automatically generate a proposal of activities and subsequently book those. While this third aspect may provide in a first embodiment thereof a rather static way by providing information and subsequently wait until the event (place, location, activity or activities) get booked (by use of the voting) with thereafter disabling the availability of the information (in case of being fully booked), in a further embodiment those providers may on the basis of the information available (voted, not yet voted, the amount of potential attendees, the list of already suggested locations and/or activities) dynamically adapt his offering. Moreover even if the offering does not succeed, the service provider is in an embodiment of the invention provide with means for analyzing his offer; the dynamics of it, to learn what happened, and to adapt his offering (for instance if he learns that his activity becomes less attractive if a threshold of possibly joining (based on the votes) users is reached or not reached or if his activity drops about when another activity is elected (for instance because of distance incompatibility or a more price attractive activity). While the above suggests an entirely anonymous analysis of the situation, also embodiments wherein groups which may wish to be named (although the individual members may still be anonymous) can be tracked and for instance be offered a better offering a second time that they use the method. Note that the anonymous character of the methods does not necessarily imply that no other data of the users (gender, age, profession) is used in the offering phase (if made available). Supplying such user data is preferably implemented by allowing the invented methods to link to methods for social media wherein such data is made available.

While the above discussion provides a multitude of possibilities to generate events (date, place or locations and/or activities) with computer assisted and implemented methods by using of customized (who is allowed to input what) inputting of data (date, place, activities) and votes (if allowed) thereon; processing this data (at least finding commonalities) and further outputting the processed data, possibly followed by booking and payment, the generated events so far require interaction by either the potential attendees or event members, including an event member and/or the providers of locations and/or activities, be it supported by various techniques to either elect their final event and/or present his optimal offerings into the system. The so far discussed system might not be sufficiently scalable.

In a fourth aspect of the invention a method for automatically generating new possibilities (combinations of dates, places and activity) which can then be feed in to the methods and user interfaces of the first aspect of the invention and/or be proposed for consideration for location and/or activity providers. Indeed by providing the methods and user interfaces as discussed above, a huge amount of data combinations become available. The automatic generating can be based on ranking the available data combinations and selecting the most occurring ones as this indicates some perceived quality by the users. The automatic generating can be based on executing an optimization technique on a weighted function. Or a combination of ranking and optimization can be provided. Optionally some randomness is used also. The automated generating may also be based on analyzing similarities, for instance between previous groups having used the system, and a present group. The invented methods may provide the option to either use such automated methods or not.

While all of the above is preferably organized within a secured environment with user accounts, not necessarily every user may feel comfortable to create such user account. Therefore possibilities, like but not limited to a virtual account, to interact with the methods and user interfaces, at least temporally and possibly with fewer privileges must be foreseen, with options to migrate such situation to a normal situation when the necessary comfort is obtained.

Note that the above described methods may not necessarily result in the yet final event. Indeed the fine tuning may require more dedicated interactions with the providers and therefore the methods, user interfaces must be adapted to further support such fine tuning.

Also although in the above discussion the term event was used, especially when bigger groups are targeted, the possibility to further refine an event as a set of sub events, each supported by the invented methods is provided, or even grouping of events.

The invention relates to a computer program product, operable on a processing engine, for executing any of the steps of the methods. The overall methods are executed on one or more servers and the user interfaces; supported thereby, are operable on any further electronic device, wired and/or wireless connected to said one or more servers. The invention further provides a non-transitory machine readable storage medium storing the computer program products described above. The invention further provides a computerized system with one or more computers, executing one or more (parts) of the above described methods. The invention further provides for data structures suitable for use in such methods, such as doublets of date, location and/or trip lets of data, location and activity.

The above methods in their generality generate such doublet or trip lets, or even more advanced data structures by transforming unconnected data (data, location or activity) to connected data, by taking into account users preferences (at least from a group of potential event members) via the voting or by transforming automatic generated combinations into real combinations again by taking into account users preferences (at least from a group of potential event members) via the voting. As many of the steps of the methods are executed on a computerized system, such as at least the inputting and outputting, even more of the steps are based on solving the technical problem of combining more dimensional preferences of users as reflected by the doublet and triplets discussed above and/or further by solving the technical problem by bringing together requests of groups of people with offerings of providers, more in particular by providing computer assistance by amongst other steps, handling the received votes, re-using past successful combinations, generating new possible combinations. The methods are hence in the field of intelligent data handling, storage and data optimization with data clearly reflecting actual items in the real world like date, place and activity.

In summary the invention can be formalized as:
(i) A (computer implemented) method for computer assisted organizing of an event to be attended by a plurality of attendees, the method comprising at the side of one of said attendees the steps of: upon receipt by one or more electronic means, linked to said potential attendee of such event, one or more of dates and a plurality of places for such events; (1) inputting on one of said electronic means a first vote related to said one or more dates; (2) inputting on one of said electronic means a second vote related to said places; and (4) transmitting said first and second votes to an electronic system, for at least in part automated determining a selection of said dates and places based on said first and second votes.
(ii) A (computer implemented) method for computer assisted organizing of an event to be attended by a plurality of attendees, after having provided by an electronic system to one or more electronic means, linked to a said potential attendees of such event, one or more of dates and a plurality of places for such events; the method comprising the steps of: (1) receiving by an electronic system, linked to the event organizer from one or more of said potential attendees a first vote related to said one or more dates as inputted by said potential attendees on said electronic means; (2) receiving by an electronic system, from one or more of said potential attendees a second vote related to said places as inputted by said potential attendees on said electronic means; and (4) at least in part automated determining by the electronic system, a selection of said dates and places based on said first and second votes.

### Brief description of the drawings

Figure 1 top part shows a possible start page of a platform in accordance with the invention while the bottom part shows a possible detailed representation of an event.
Figure 2 shows an example of a poll about a location.

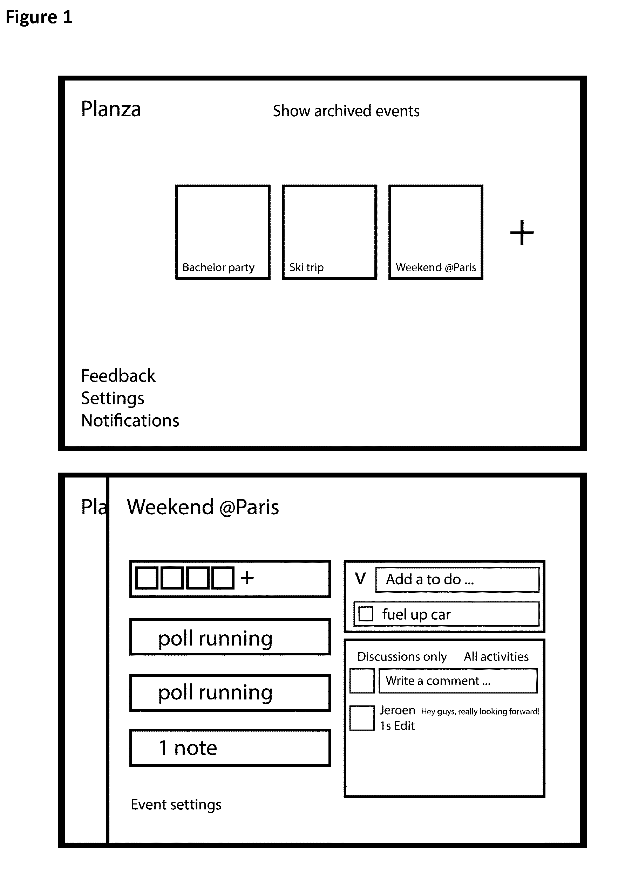

Figure 1 illustrates the suggestion module showing the 3 suggestion categories.

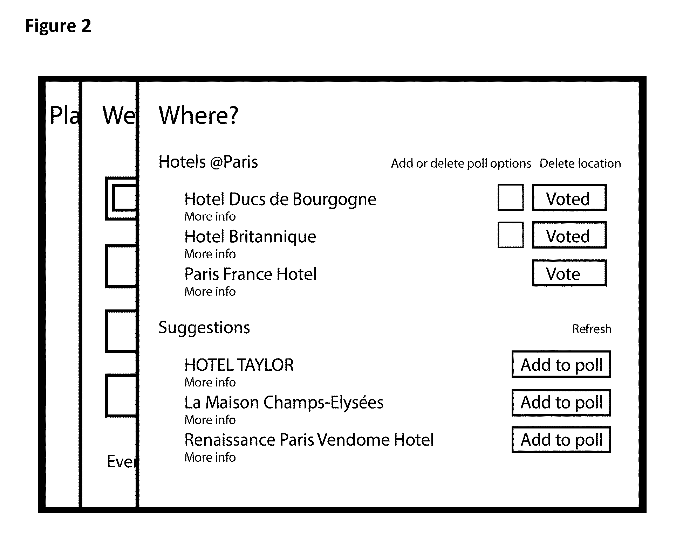

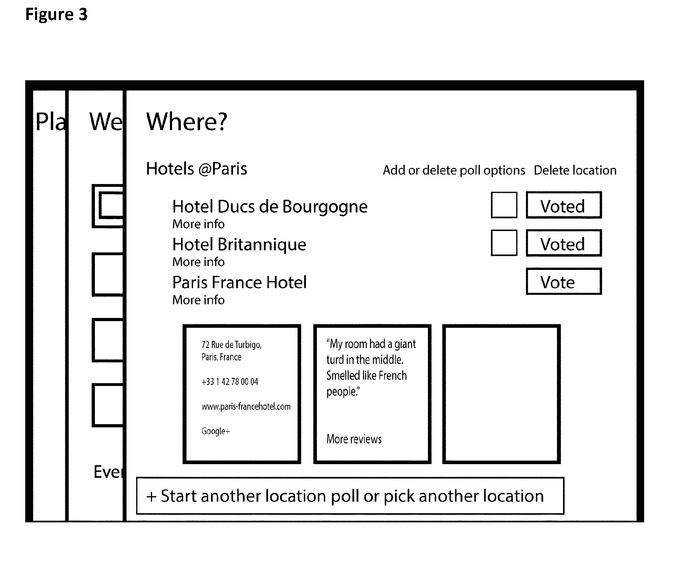

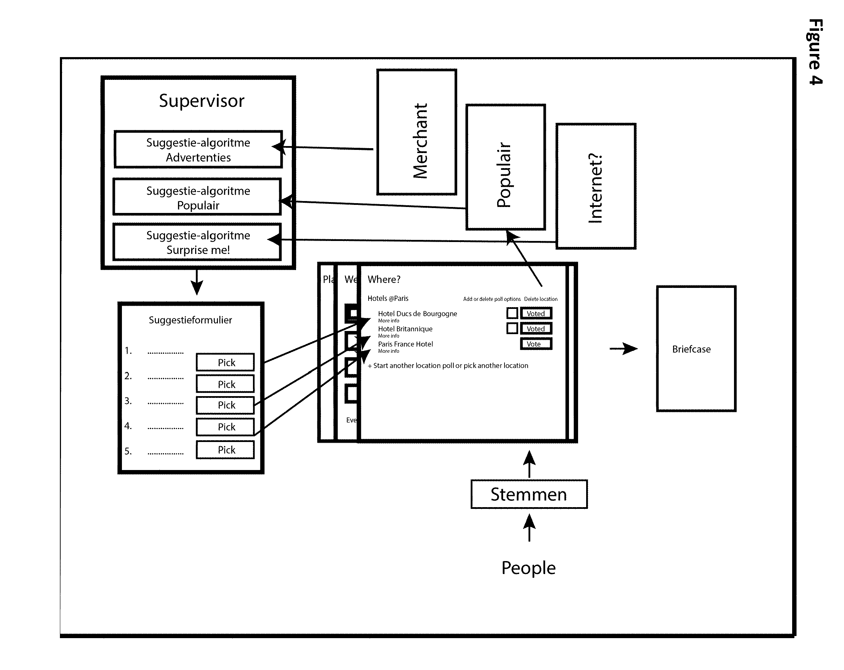

Figure 2 presents the work flow involved in planning an event, with a detailed representation of the suggestion module.

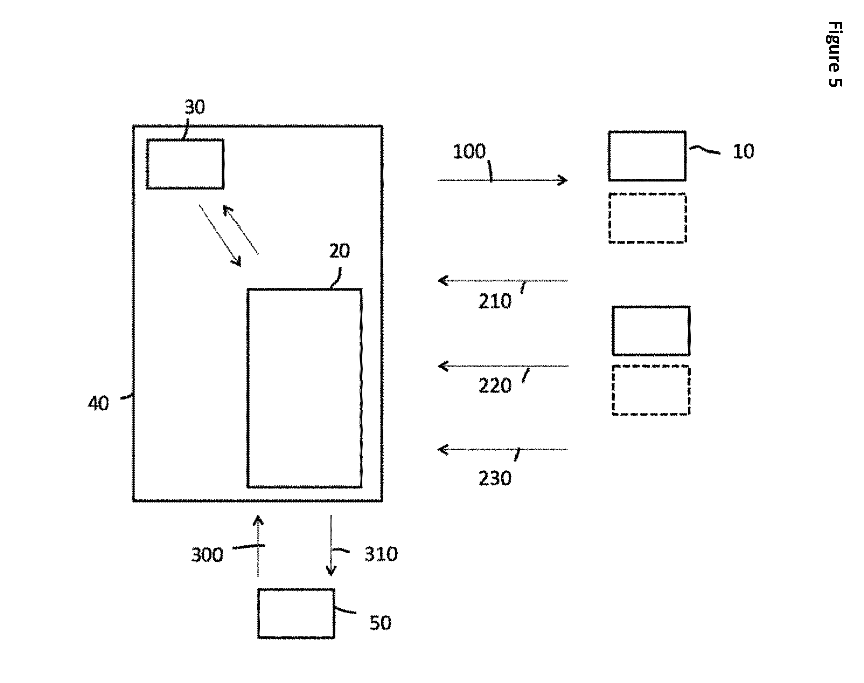

Figure 5 shows a schematic representation of the invented platform, with on the one side event members with one or more electronic devices or means (10), the side of an event member (or organizers), each also be provided with electronic devices or means (30), and supported by a central computer system (20), collectively denoted the computer architecture (40) and the interactions back and forward from those sides (100, 210, 220, 230), more in particular related to event proposing, votes on dates, votes on places and optionally votes on activities. Moreover also the interactions back and forward (300) (310) with activity providers (also with one or more electronic devices or means (50)) is shown.

### Detailed description of the invention

The invention provides an intelligent all-in-one planning platform (network of computer systems, electronic means and methods executed thereon) that offers members of an event (and the interested ecosystem) a comprehensive approach to specifying all their plans, from who-where-when to what, and further provides to the involved insights by use of advanced suggestion algorithms for the selection of relevant activities which can be performed at the chosen location.

In an embodiment of the invention a formula/metric to assess the popularity of an activity based on the voting behaviors of the event members of an event is used. An inventory of all relevant and determining factors is used.

In an embodiment of the invention an intelligent suggestion algorithm for activities which uses the different criteria that are used to arrange the order of activities. Examples are popularity, sponsor value, geographical distance, and freshness. In a further embodiment complex ranking methods based the multi-attribute utility theory may be integrated in the algorithm. In another embodiment a decision maker utility function based on a complex combination (linear, non-linear) of the criteria and their proportional weight is exploited.

In an embodiment of the invention one may decide to tune the suggestion algorithms, based on an intelligent and complex supervisor algorithm for the composition of a limited list of suggestions based on relevance, category, type, diversity. A metric is used to determine a trust score. Various algorithms are provided to update archived activities and detect repeated information. A suitable high-performance database model is used. Various techniques for optimization of the user experience are integrated. Analysis methods of and for event members, organizers and merchants are provided.

The planning platform as described provides a fast answer to the question of what activities a group of colleagues/friends/family will engage in during an event. In addition, they give advertisers (merchants) the opportunity to offer their services in a more targeted way. Thanks to this platform, a number of unique features become available to convince large numbers of event members to use the ideal planning tool for all their plans.

In order to help event members in an event with its organization, from A to Z, the invented platform allows event members to plan an event together. Setting the date together online, choosing accommodation, determining the route and means of transport, dividing tasks, uploading and sharing files (such as plane tickets)..., in short, the entire process of organizing an event can be done using this intuitive planning tool based on the most recent web technologies. Via a carefully designed dashboard, in which events are represented by means of tiles (similar to some smartphones and the Windows 8 operating system - see Fout! Verwijzingsbron **niet gevonden.),** the user is able to create new events very easily.

For the practical organization of an event, the method uses the following three-step plan:
1. **Who's in?** An event member invites his companions via e-mail or social networks and adds them to the list of event members.
2. **When?** An event member chooses one or more times when the event could take place.
3. **Where?** An event member can add one or more locations. The platform has ensured a smart integration with the API of Google Places. Google Places is a service by Google which gives visibility to enterprises by highlighting them on a map (via Google Maps) when a search is performed. For instance, when a search for a bakery is performed for the location Antwerp, all bakeries in that area (that are registered with Google Places) will be highlighted. By simply entering text, any location worldwide can be searched. This can be the name of a hotel, but also, for instance, a tourist attraction, a museum, an address... The integration with Google Places makes it possible to display additional information about the location, such as e.g. a map showing the location, user opinions about the hotel, etc. An example of this can be seen in Fout! **Verwijzingsbron niet gevonden..**

>

The platform may also offer two other functionalities: (1) a module to enter actions to be taken in preparation of the event (a 'to do' list, e.g. buying meat for a BBQ) and (2) a discussion forum where more concrete details concerning the trip can be communicated. An example of the different components of an event can be seen in **Fout! Verwijzingsbron niet gevonden..**

Once an event member has completed this information (proposals for who-where-when), each event member is invited to vote for the times and locations that are convenient for him/her. This is done through a poll. With a simple push of a button on the user's dashboard, he/she can express his/her preference. The results (and the votes of the other event members) are immediately visible. An example of such a poll about a location can be seen in **Fout! Verwijzingsbron niet gevonden..**

The planning of an event using the three-step plan described above mainly reduces the administrative burden that precedes it. The process of determining who and (especially) when and where still leaves one very important question unanswered: what will we do once we get there? In a further aspect of the invention the platform does allow us to include activities in the organization of an event, to avoid that an event member and the event members still need to discuss, either beforehand or once there, what exactly they want to do during the event. This means a waste of precious time and difficulties to reach a compromise. Moreover, the activities suggested by the event members are often based on fragmentary information about what exactly is possible at and near the location of the event (some get their information from a tourist pamphlet, others from a website, others from a TV ad, etc.). Taking into account that the Internet offers a huge number of information sources, other activities which do not appear in the abovementioned channels may be found as well. In order to circumvent the inefficiency of activity planning, this aspect of the invention provides an intelligent suggestion module to assist the user in finding an answer to the question of what exactly one wants to do. The invention wants to provide an answer to this question in order to be able to offer an integrated approach to planning events and activities together. 'Together' in the sense of combining activities and who-where-when, but also 'together' in the sense of the group of people. The invention builds on the following technological innovations: a new suggestion algorithm for activities, based on the location filled in by an event member. The algorithm generates suggestions divided into three categories: (1) suggestions from advertisers, (2) suggestions for activities that are popular, and (3) suggestions from public information sources ("surprise me!"). The suggestion algorithm uses three different information sources for this: (1) a data source containing activities proposed by advertisers, (2) a data source containing archived activities (which were chosen at some point in the past) and (3) the Internet **(Fout! Verwijzingsbron niet gevonden.).** Especially the latter requires intensive pre-processing to enable machine interpretation, for instance by use of semantic web technology. The suggestion algorithm is made intelligent enough to quantify the relevance of the suggestions. We will build a new all-encompassing algorithm which will combine the suggestions from the different categories, prioritize them and reduce them to a shortlist of 5 suggestions, although the categories will be maintained (if there are sufficient suggestions within the same category). Diverse requirements will be applied to this general algorithm, including a diversification of the suggestions (it is not useful to suggest different activities falling under e.g. water sports), the availability of sufficient suggestions, the relevance value of the suggestions, etc.

An information processing system is presented that archives and analyses the information flows between the different algorithms and the interactions with an event member ('picking' behavior) and event members (voting behavior). This analysis allows for a measuring tool for the popularity of activities. The voting behavior of the group of event members (user validation) is very important in this, at various levels (an event member who selects certain activities from the shortlist and includes them in the poll; event members who vote for the various activities; the activity that is finally chosen). This information allows modelling the user profile, which may be included in the suggestion algorithm. The invention provides for gathering of this type of information in a high-performance searchable and scalable database and mechanisms to ensure that the archived activities are up-to-date. The invented platform hence suggests relevant activities and/or useful suggestions for a location (where?) and/or general suggestions. A general suggestion can be, for instance, a specific product of an advertiser if the product bears resemblance to the location and/or the activity. E.g. an ad for a ski suit in case of a ski holiday. A schematic representation of the work flow involved in planning an event, integrating the suggestion algorithm, can be seen in **Fout! Verwijzingsbron niet gevonden..** This diagram focuses on 'what', but is equally valid for 'where' and 'general'.

With the integration of this technology, the invention provides embodiments ranging a simple (though already with more feature than the state of the art) planner (who-where-when) to an intelligent planning tool that drastically reduces the amount of work involved in planning an event from A to Z, thus placing the focus on the essence of plans: a pleasant outing with friends/colleagues. Moreover, the tool is able to discover new activities in the area where people will be staying through the use of a very large amount of information from different online channels.

The technological innovations and the (combined) uses thereof described above requires suggestion algorithms for activities, supervisor algorithms that are responsible for compiling the shortlist, and fast and efficient search techniques and mechanisms for data structuring and machine interpretation; and smooth integration of all those. The invention exploits means for enabling inputting for sponsors, event members and organizers. The invention attaches measures to such inputs such as popularity, proximity, a degree of trust/measure of relevance. The invention builds on database technology: selected activities are stored in a local database, made scalable, and provided with means for detecting repeated information and updating the contents.

In accordance with an embodiment of the invention a responsive web app (being an application executed within a web browsers) which is scalable to an increasing number of browsers and platforms. The best available open-source technology is used, such as JavaScript, HTML5, CSS3, Ajax and Web Sockets to guarantee an optimal and user-friendly interface. Thanks to this web technology, the embodiment succeeds in achieving a very fast performance (changes were shown in real time) on a great variety of (mobile) platforms, such as laptops, tablets, smartphones, etc., thus launching a future-proof application. An illustrative example of the platform-independent design can be seen in **Fout! Verwijzingsbron niet gevonden..**

Without restricting the invention thereto, a few of the elements and features of the invention and their technicalities are now described in more detail further on.

As discussed before methods and algorithms to make relevant suggestions for activities based on the location entered by an event member of a poll are exploited in an embodiment of the invention. Those activities can be sponsored suggestions, popular suggestions and suggestions based on a search (for activities) on the Internet (surprise me!). The methods for organizing an event are supported or enabled by a supervisor algorithm to bundle the suggestions provided into a limited list from which an event member can select his/her preferred option(s) and include them in a poll. Moreover in an embodiment of the invention feedback about the pick-and-vote behavior of an event member and/or event members of an event is provided in order to enable a more accurate measurement of e.g. the popularity of activities. This aspect of the invention may be realized as a stand-alone suggestion module to fill in the 'what' in the entire platform. As indicated in **Fout! Verwijzingsbron niet gevonden.Fout! Verwijzingsbron niet gevonden.,** suggestions are generated based on three conceptual information sources, namely a database of sponsored activities provided by advertisers who want to promote their services via the platform, a database of 'popular' activities and, finally, public data sources. However, the name 'popular data source' is somewhat misleading. This is because this data source does not only contain popular activities, but all activities that have ever been included in a poll by organizers. The term 'popular' refers to the way in which the data source is used rather than to the content. Suggestions will be generated in three categories (as defined earlier) with a one-to-one mapping with the underlying data source. The main objective of the suggestion algorithms consists in formulating *relevant* activities, where relevance is mainly based on the provided location. This measure of relevance is a highly complex combination of different factors which, however, depends on the data source. E.g. when determining a relevant sponsored suggestion, the sponsor value of the advertiser will play an important role. When suggesting popular activities, on the other hand, this will not be of any significance, and feedback from event members will be an essential factor. Therefore, based on these small variations in the definition and the concept of relevance, in a further embodiment of the invention a separate suggestion algorithm for each category, with largely the same underlying technology is used. Concretely in such example, we will use (1) suggestion algorithm for sponsored activities, (2) the same, but for popular activities, and (3) the same, but for activities from public data sources. As 'popularity' is an important ingredient of the first two algorithms, the invention provides also a description of the way in which information about user appreciation and validation is processed and quantified. As can be seen from **Fout! Verwijzingsbron niet gevonden.Fout! Verwijzingsbron niet gevonden.,** an event member and event members may provide feedback about the results of the suggestion module in various places. Two information flows can be distinguished:
1. Feedback about the activities: the voting behavior of the event members and the 'picking' behavior of the event members (inclusion in the poll, final choice of activity) provide a lot of information about how popular certain activities are.
2. Feedback about the users: the activities a certain event member has voted for give an indication of the interests of that event member. For instance, an event member who has voted for 3 activities related to sports will probably be a sporty person.

In an embodiment of the invention the voting behavior of the event members is used to determine popularity. At this point, accurate user profiling (based on 2) requires too much information about the voting behavior of the user. The objective of this task is to calculate a score that can symbolize popularity; a ranking (with this score as one of the possible criteria) will be made in the next tasks. The mathematical formula to calculate the score must take into account the following information:
1. Local information about activity X:
   ∘ The number of votes assigned to X within the event by the event members in the poll.
   ∘ The total number of votes cast in the event.
   ∘ The number of activities included in the poll.
   ∘ The number of votes cast per event member.
2. Global information about activity X:
   ∘ The total number of events in which X has been included.
   ∘ The total number of votes for X across all events.
   o The total number of activities across all events (for which X was included in the poll).
   o We note that we should prevent typical popular activities (such as e.g. a visit to the Eiffel Tower in Paris) from being suggested again and again, which would further increase their score.
3. Other information about activity X:
   o When e.g. Bruges is entered as a location, it may be interesting to also suggest activities 'near' Bruges (e.g. because it is a popular activity, or an activity that better fits the event member's preferences). We will study how we can quantify a relationship of geographical distance. Travel time is a possible solution, but maybe also GPS information, or even a correlation function between the different locations (e.g. coastal towns Ostend, De Haan, Bredene and Middelkerke, but not further inland).
   ∘ The number of times activity X has been selected by the event members as a final choice.

In summary, there are quite a few measurable variables which can result in a measure of popularity with the help of a mathematical formula. To solve this problem, in an embodiment of the invention we will start by solving each sub-problem (popularity based on (1), based (2) and based on (3)) separately, for instance by using a linear combination of the above variables. Here, it is important to determine the correct values for the weight factors. In a more advanced embodiment non-linear combinations are used. As the number of degrees of freedom will then increase, finding a balanced solution will be even more complex, which is why we will initially opt for linear combinations. Afterwards, we combine the solutions for the three sub-problems into one formula. To determine the initial value of the degrees of freedom, we apply a few basic rules. In a last step, the popularity score is standardized across all activities, to allow for comparison between them (the score will preferably be expressed as a real number between 0 and 1).

A suggestion algorithm for sponsored activities is based on the solving of a complex ranking problem, as what is achieved is a sorted list headed by the activities with the greatest relevance. The order of the activities in this list will be used by the supervisor algorithm to make useful suggestions (although the order will not be the only criterion). To rank the activities, the suggestion algorithm will use a number of criteria, namely: the popularity score as described above, the sponsor value of the activity and the geographical distance (whether represented by travel time, GPS location...) of the activity to the location entered (both parameters - location and distance-will be the input variables of the algorithm). We consider popularity and sponsor value to be measurable criteria, whereas geographical distance is a rather vague logical criterion (the concepts 'far', 'near', 'very far, etc. are not exactly quantifiable). The description of geographical distance as a vague logical criterion offers a far greater flexibility compared to the use of a hard limit (e.g. activities at a distance of less than 3 km from the center). We note that sponsor value is preferably standardized. The modelling of geographical distance can be based on many categories (e.g. 'near', 'far', 'very far') and linked to an assignment function for each category. The exact form of these functions is an additional variable, determined empirically. Note that here we are not making a distinction based on the type of activity (sports, gastronomy...). To solve the ranking problem, multi-criteria decision making/analysis (MCDA) is preferably used. In a first embodiment (1) outranking methods are used while in a second embodiment (2) M.A.U.T. (multi-attribute utility theory) is used. Outranking methods use pairwise comparisons between the different activities (for all criteria) based on a preference relationship; the second category is the preferred embodiment. The full MCDA process is quite complex, but not all steps in this process apply to this invention, more in particular it is an aspect of the invention to precisely use the following steps:
1. Identification of the criteria (see paragraph above) each criterion consists of only 1 attribute, which makes further processing easier.
2. Calculation of usefulness for each activity by means of an aggregation function.
3. Making a ranking.

The use of M.A.U.T. is connected to the definition of an aggregation function (sometimes also called a utility function for the person deciding). The exact definition of this function constitutes a real challenge as we need to make a representative aggregation of the different criteria. Even with only three criteria the design of such a function soon turns into a complex matter. The literature describes different types of utility functions and strategies to test and fine-tune them. In an embodiment of the invention an additive model (represented by a weighted sum) is suggested.

An initial choice of the weights can be made by following a few basic rules (e.g. sponsor value will have a greater influence on the ranking order than e.g. geographical distance). In order to further fine-tune the weight functions of the M.A.U.T. model, we will use so-called sensitivity analyses. These analyses will provide a clearer insight into the functioning of the aggregation function, allowing us to use this knowledge to further fine-tune the parameters. The final ranking of all activities will then be made using the value as calculated based on this function.

Preferably the different steps are further optimized in view of the (calculation) time, as the number of activities will continue to grow, as a result of which the computational capacity needed for the above calculations will increase continuously. Especially the criterion of geographical distance is preferably optimized.

The suggestion algorithm for popular activities preferably used in a largely similar way as described above. However, here, we will base ourselves on popularity, geographical distance and a parameter that reflects the temporal nature of the activity (freshness). Google's web crawler (Googlebot) uses this parameter as an indicator of popularity/degree of importance of a web page (and therefore the position in the ranking of search results). We use this parameter, among others, to determine the refreshing frequency of the activity database. In a preferred embodiment of the invention we go a step further. Instead of determining freshness based on a very narrow time frame, as is the case with the ranking of web pages, we will model the evolution of the number of votes starting from the inclusion of the activity into the database. The challenge lies in translating this curve into a real (or maybe even a vague logical) value. Trend analysis techniques are used. In a first example the fitting of a linear straight line provides a satisfactory result (after elimination of the start-up). The slope of that straight line could then symbolize the evolution of the number of votes (for that activity).

The supervisor algorithm will combine the results of the different suggestion algorithms to one concise list of suggestions which will be proposed to an event member of the poll. The following criteria must be taken into account here:
- The ranking (real value, non-ordinal) of each activity as calculated. This value will also give us an idea of their relevance. The higher the value, the better the activity will score for the different criteria.
- The description of the category of each activity (sponsored, popular, from public sources).
- The description of the type of activity (e.g. sports, gastronomy...).
   The objective of the algorithm is: (1) a list of relevant suggestions, and (2) a differentiated list of suggestions. Obviously, an event member will always have the possibility to enter own activities into the system, in addition to the suggestions provided by the algorithm. As soon as these are included in the poll, additional information will be collected with the help of technology to enrich the description of the activity. The supervisor algorithm must also take this into account. In other words, each time a suggestion is added to the poll, the supervisor algorithm will compose a new list of (other) relevant suggestions. To reduce the complexity of the algorithm, in a preferred embodiment of the invention the design is divided into two levels: (A) the decision logic which will determine the composition of the limited list (which categories, which types, how many in each category...) and (B) the decision logic for the selection of the activity in each category as determined in (A). Both parts are closely related to each other, with various interactions between them, although (A) steers the process. The algorithm fulfils the following requirements:
- The decision logic (A) must strive for a balanced distribution of the number of activities across all categories.
   The following must be taken into account here:
   ∘ Pre-set number of suggestions per category. The exact values for these numbers are part of the research.
   ∘ If there are no relevant suggestions, or too few of them, for a certain category, the number must be redistributed into other categories.
   ∘ If the relevance of the suggestions is too low, the supervisor algorithm must decide whether any suggestions will be generated at all (for that category or in total).
- The decision logic (A) must suggest activities of different types (diversification). This will depend on the following:
   o When compiling the limited list of suggestions, the supervisor algorithm must take into account the type(s) of activity(ies) that have already been added to the poll. These can be activities which have been proposed by an event member, but also activities which have previously been selected from the limited list by an event member. In conclusion, it is clear that the supervisor algorithm will be performed over and over every time a new suggestion or physically entered activity is added to the poll.
   ∘ Mutual relevance of the different types of activities.
   ∘ A certain degree of randomization to give all activity types a chance.
- Decision logic (B) will select activities based on:
   ∘ Type as suggested by (A).
   ∘ Ranking as determined by suggestion algorithms.
   ∘ Trust score as determined.
   ∘ Probability theory (probabilistic method) to avoid over-selection and starvation: each activity must receive an opportunity to be suggested. This is particularly important for sponsored suggestions as advertisers may pay to include their activities in the platform.

These requirements emphasize the need for a complex integration of different technologies. The invention may be built in different flavors. For instance, in a basic design no stochastic processes, mutual relevance (between types) or redistribution of the number of activities per category is taken into account, and the activities will be selected based on the ranking and trust score. For the frame structure of the basic design (enabling adding of complexity) we will use a flow chart which will model the cyclic process. Adding complexity will then mean adding extra stages/situations and additional conditions. The following aspects are considered in the building of the basic design:
- Setting the number of suggestions per category. A minimum and maximum for the total number of suggestions in a limited list is set. After that, we will determine the minimum and maximum numbers for each category.
- To fulfil the differentiation requirement, we choose a known algorithm in the basic design to generate random numbers. However, we use a method for the representation of the random number (e.g. between 0 and 1) for a type (excluding types that are already included in the polls).
- The selection of the activity (based on the selected type and the category) will take place by means of the corresponding suggestion algorithm, and the activity with the highest ranking for the desired type will be selected.

Next, we may extend the design by adding the following intelligence:
- An algorithm which is able to compare that mutual relevance of the different types and categories. This algorithm must provide knowledge to enable us to make better choices where the number of suggestions per category is concerned. I.e. answers to questions such as:
   ∘ Are there sufficient relevant suggestions, globally speaking?
   ∘ Are there sufficient relevant suggestions per category?
   ∘ Are there sufficient relevant suggestions per type?
   ∘ Which types/categories contain more relevant suggestions than others?

In advanced embodiments of the invention statistical tests (non-parametric tests, ANOVA analysis) are exploited to give a better idea of the differences in relevance (of activities) between categories and types. These algorithms allow us to make a better distribution of the number of suggestions to be shown in each category.

Algorithms that generate random numbers that are subject to a probability distribution function are used. To this end, we will design probability distributions per category and per type which can act as models for the relevance of that category/type. Moreover, these probability distributions are subject to the already selected activities (e.g. if an activity of the type 'music' has already been selected, the probability of the selection of another activity of the same type will decrease). These algorithms will allow us to make a better distribution of the number of suggestions across the different types. Activities of types that have a high relevance are more likely to be selected. However, probabilistic randomization also gives an opportunity to activities belonging to less relevant types. In particular, for sponsored suggestions we will study which mechanisms are essential to prevent over-selection and starvation. In an exemplary platform stochastic processes are used for this.

To summary so far, the modularity of the invented methods needs to be pointed at, starting from the prior-art date voting, one or more additional features (place and activity) are now added that can be voted at, more over those features are no longer only suggested by the event organizer, but one or more values of the to be voted features can be generated automatically, and as such the invention goes beyond organizing a single event, but enables tapping in a set of information, based on previous use of the event organizing methods. As pointed out above, in depth understanding of the complex nature of the event organizing dynamics, is integrated in the invention and depending on the level of quality (and cost) to be achieved, basic up to very advanced algorithms are supporting the invented platform, and for instance the specialization of the algorithms per category of activities is an important selection and insight, enabling the approach.

Besides the suggestions that are generated based on already archived activities, in a further preferred embodiment also offers users new suggestions from public information sources in order to continually enrich our own database with new activities in areas where currently only little information is available (in the database). When we base ourselves on the location as entered by an event member, we can look for suitable activities with the help of a few standard settings for e.g. the type of activity. Additionally, an event member can then adjust these standard settings according to his preferences (e.g. via sliders). In an exemplary embodiment a number of types as 'sports', 'culture', 'gastronomy', etc. is used. An inventory of the different possible types is created so that an offer can be created that is as diverse as possible. Existing travel planners, such as CityTripAdvisor, where a rudimentary categorization has already been made as well, can be used. However, in a more preferred embodiment a number of sub-types per type (e.g. 'sports' → water sports, ball sports, cycling...) are foreseen.

Similarly as for locations, organizers of a poll can suggest a website that contains information about one (or several) activity(ies). In order to be able to integrate the content of this website into the list of suggestions, this website must be inspected searching for relevant keywords that provide more information about the location, the type and the description of the activity. We will do this by scraping the website, extracting the text and images and filtering the named entities from the text.

When searching for activities, we start from the location and the type. Initially, content will be bootstrapped via the scraping of web pages and the consultation of sources that offer an API with access to their structured data. Thus, aside from the use of a large amount of available unstructured data (e.g. the results of a Google search), we also look at structured sources such as Foursquare, Tripadvisor, Wikitravel and Google Maps/Places. In case of a non-structured document (e.g. a Google search result) we want to be certain that the web page is actually about an activity (and that it is valid). Therefore, the choice of the keywords that need to appear in the document will be decisive. To this end, we will make an inventory of all information which may be useful at some point. For instance, we can look for an address, contact information, certificates, etc. Some providers will describe their content using *schema.org;* if such information is available, it will be possible to interpret it correctly. The entire search will take place in English, worldwide (via Google), and admit any kind of activity (e.g. also farmer's golf). The web pages found will serve as input for further steps.

As mentioned before, the supervisor algorithm will select activities from public sources, among other things based on the trust score (e.g. 'kayak waasmunster': is this really for kayaking in Waasmunster?). The trust value can be determined by looking at a combination of features: domain, address, availability of a telephone number, activities that can be found in several sources, whether structured data is available or not, quality of the feedback via the voting behavior of the users. We note that if a certain source turns out to be reliable, it may be interesting to keep following that source and extracting its content: by further scraping (e.g. website of a cinema chain) or via the API if this is available.

The database technology that is best suited for the archiving of activities suggested by sponsors and event members preferably is scalability, enables detection of repeated information (activities that are already in the database) and the way in which the contents can (periodically) be updated. With an increasing number of users, the number of events, and hence also the number of activities, will increase spectacularly. Therefore, we are using a scalable database technology, preferably with a simple structure. Concepts such as response time (latency) and throughput speed are also important, as the database will simultaneously be consulted in the context of a large number of events. Taking into account the requirement that suggestions (from this database) should preferably be shown as quickly as possible (ideally in real time), a NoSQL (e.g. MongoDB) or the like database is preferably the best option. For each activity that is added to the database, we store an amount of information that is as extensive as possible. For instance:
- Location (if possible GPS information)
- Time
- Keywords (e.g. type of activity, 'museum', 'sports',...)
- Textual description (which could be used for text indexing)
- One or more URLs with additional information + hash value of the web page
- A date stamp of the inclusion of the activity or when the web page (of the activity) was first analyzed
- Fields to store voting behavior

In an embodiment of the invention this information can be obtained in case of advertised suggestions from the advertiser via a fill-in form). In the case of free suggestions (surprise me!) technology will distil this information from the URLs that have been requested and provided with meta-data. When activities are entered by an event member (e.g. 'farmer's golf'), we will use the activity entered (+ the location and possibly the time) as keywords in a Google search. If a relevant result is obtained, technology will further process and analyze the search results. Depending on the reliability of the results, additional information can be stored in the database.

In order to update the contents of the database, periodically revising all records in the database is performed. The use of the date stamp as a decision criterion to decide on whether to update the record or not (e.g. only records older than 1 month) is a possibility. However, this approach is insufficient for certain types of activities (e.g. for the type 'music'), where the refreshing frequency should be higher. In addition, the frequency with which an activity is suggested (and included in a poll, and voted for) will also be an important indicator for the refreshing frequency. An algorithm for this IS based on a combination of activity frequency, type and date of inclusion.

For the detection of repeated information, we start from the assumption that a unique address (possibly GPS coordinates) is linked to each activity. However, in practice, we need to permit a limited deviation. The reason for this is that GPS information is not always accurate, the determination of certain locations is not unique (e.g. recreation area Blaarmeersen in Ghent: entrance?, centre? etc.). When adding a new record, we first filter based on location, taking into account the use of a perimeter, and then compare the other fields (keywords, description). By comparing based on the address, we also avoid language dependency (present e.g. in the description; language dependency is indirectly stimulated as the platform is preferably offered in a plurality of different languages).

In summary the invented methods intelligently combine various pre- and post-processing of data techniques, especially trimmed or adapted for handling data related to the various aspects of events, such as date, place, activity, and the inaccuracy that might be part of such information, especially when generated automatically. The invention presents methods, computer systems and related aspects like software and databases, specially selected for the purposes as outlines above by providing suitable data types and structures and applying suitable mathematical operations, to be computed on the underlying computer architecture or network, employed for rolling out the invented platform.

Note that preferably one or more of the event organizers predetermine the attendees (by electronically providing an invitation) thereby defining those as potential attendees.

Note further that the entire system is enabled by an electronic system (40, 30, 20), in one or another way, being linked to the one or more event organizers. While the entire method engages event organizers and attendees, part of the methods are executed in essence on the side of the event organizers while other are on the potential attendee side.

The invention is about computer supported methods to share ideas and decide in group, with one click. For planning activities and reuniting with friends and family a single tool to plan a time, location and activity is provided. The invention provides a way to efficiently combine all of the options (where, when, ..) and decide. The invented method and tools solves this by providing a simple way to aggregate and share ideas with friends and family so they can give feedback, suggest alternatives and vote for their preference and availabilities. Adding options is easy and can be done directly from existing company sites with one click on a tool button. In addition, the invented approach provides business venues such as movie theatres, concert halls and stadiums with a new way to communicate with visitors and fans. When the invented option is added to a user's account, they receive a personal invitation with the event details, which they can then easily share. These details can be automatically updated by the original venue organizing the event, providing a method to communicate schedule changes, special offers, availability and updates all within the application in accordance with the invention. For example a football club can update a game location or a movie theatre can suggest a new movie coming soon. Businesses can also gain insights in who is planning to join their events, providing valuable information about future plans. The invention provides for planners content and context. Content being: what to do, when, where and with whom? Context being: in the mindset of planning something. The invented approach provides focus on the critical time between inspiration and the event, when people decide when and where to go. This is where the invention adds value by becoming a place to aggregate ideas and decide in group. Unlike other planning applications, which depend on manual entry by one event organizer or have to guess at what a user might like with endless suggestions. The invention leverages the limitless options available online and adds them to an event with just one click. It brings content people can use to shape their plans, at the time when they're in the mindset of planning. The invention is supported by API, websites and analysis tools for creation of suggestions, updates and insights from businesses that use the API.

Alternatively formulated the invention relates to a method for organizing of a social event, the method comprising executing on a processing engine computer program instructions for the steps of: (1) providing to one or more electronic means, linked to predetermined potential attendees of such event, data representative for an event to be attended by said potential attendees and comprising of one or more of dates and a plurality of places for such events; (2) receiving from one or more of said potential attendees a first vote related to said one or more dates as inputted by said potential attendees on said electronic means; (3) receiving from one or more of said potential attendees a second vote related to said places as inputted by said potential attendees on said electronic means; and (4) at least in part automated transforming said data representative for said event by determining a selection of said dates and places based on said first and second votes.

The above method using electronic means and system, comprising of such electronic means, processes in an electronic way values related to the physical world, in particular availability and place of a plurality of persons; and/or by bundled processing of time and place info provides the effect of increased data processing and/or data transfer efficiency. The physical world is here modelled as an event, to be joined by a plurality of persons, while attributing values, here availability (time), place (and optionally ability or willingness of a person to join an activity) to a person while ensuring that such attributed values remain linked to a person. The underlying physical relationships pose a constraint for the automated determining a selection of said dates and places based on said first and second votes. More over those values are represented in a format suitable for electronic processing and hence entry in electronic devices. Moreover the specific technical context of having a plurality of electronic devices, each one linked to attendees while ensuring communication with a central electronic means for joint or combined processing of all inputted information for decision making in combination with feeding the output of such joint or combined processing back to said electronic devices is to be highlighted. It is understood that said entry of data does not happen simultaneously hence sufficient storage capabilities (dependent on a maximum of users per event) centrally on a per event basis are foreseen. While the back transmitted decision is finally available for display to the participant attendees, in a specific implementation it is also stored in the electronic device for instance in an electronic agenda application.

## Claims

1. A (computer implemented) method for computer assisted organizing of an event to be attended by a plurality of attendees, the method comprising the steps of: (1) providing (100) to one or more electronic means (10), linked to said potential attendees of such event, one or more of dates and a plurality of places for such events; (2) receiving (210) from one or more of said potential attendees a first vote related to said one or more dates as inputted by said potential attendees on said electronic means; (3) receiving (220) from one or more of said potential attendees a second vote related to said places as inputted by said potential attendees on said electronic means; and (4) at least in part automated determining a selection of said dates and places based on said first and second votes.

2. The method of claim 1, further comprising the step of: assigning by said one or more event organizers voting privileges to said potential attendees to allow or disallow them input said first and second votes; and wherein said inputting in step (2) and step (3) is made for each of said potential attendees conditional to the assigned voting privilege.

3. The method of claim 1 or 2, wherein step (1) further comprises providing to one or more electronic means, linked to said potential attendees of such event, a plurality of activities for such events; and a further step (5) of receiving (230) from one or more of said potential attendees a third vote related to said activities as inputted by said potential attendees on said electronic means, wherein said step (4) further comprises: automated determining a selection of said activities based on said third votes; whereby optionally said voting privileges allow or disallow them input said third votes.

4. The method of claim 3, wherein at least part of said activities are automatically provided by using said dates in combination with said places.

5. A (computer implemented) method for computer assisted organizing of an event to be attended by a plurality of attendees, the method comprising at the side of one of said attendees the steps of: (1) receiving by one or more electronic means (10), linked to said potential attendee of such event, one or more of dates and a plurality of places for such events; (2) inputting (210) on one of said electronic means a first vote related to said one or more dates; (3) inputting (220) on one of said electronic means a second vote related to said places; and (4) transmitting said first and second votes to an electronic system (40, 30, 20), for at least in part automated determining a selection of said dates and places based on said first and second votes.

6. A (computer implemented) method for computer assisted organizing of an event to be attended by a plurality of attendees, the method comprising, the steps of: (1) providing by (100) an electronic system (40, 30, 20) to one or more electronic means (10), linked to a said potential attendees of such event, one or more of dates and a plurality of places for such events; (2) receiving (210) by an electronic system, linked to the event organizer from one or more of said potential attendees a first vote related to said one or more dates as inputted by said potential attendees on said electronic means; (3) receiving (220) by an electronic system, from one or more of said potential attendees a second vote related to said places as inputted by said potential attendees on said electronic means; and (4) at least in part automated determining by the electronic system, a selection of said dates and places based on said first and second votes.

7. A computer program product, operable on a processing engine, for executing any of the steps of the methods in claims 1 to 6 in the electronic system and/or the electronic means related to anyone of said plurality of potential attendees.

8. A non-transitory machine readable storage medium storing the computer program products of claim 7.

9. A computer system (10), for use of a potential attendee of an event, comprising: (1) means for receiving from an electronic system (40, 30, 20 and displaying to said potential attendee one or more of dates and a plurality of places for such events; (2) means for inputting a first vote related to said one or more dates; (3) means for inputting a second vote related to said places; and (4) means for transmitting said first and second votes to the electronic system for at least in part automated determining a selection of said dates and places based on said first and second votes.

10. A computer system (40, 30, 20) for use by one or more event organizers, comprising: means for inputting and transmitting to one or more electronic means (10) to a plurality of potential attendees of said event, one or more of dates and a plurality of places for such events; (2) means for receiving from an electronic means linked to said one or more of said potential attendees a first vote related to said one or more dates as inputted by said potential attendees on said electronic means; (3) means for receiving from said electronic means, and optionally displaying a second vote related to said places as inputted by said potential attendees on said electronic means; and (4) means for at least in part automated determining and displaying a selection of said dates and places based on said first and second votes.

11. A (computer implemented) method for enabling computer assisted organizing of an event as in any of the method as in any of the previous claims, executed at least in part on a computer system, comprising the steps of (1) providing, by either a location and/or attraction provider, to said computer system, by use of one or more electronic means, availability and offering information about locations and/or attractions in relation to dates; and/or (2) receiving, by either a location and/or attraction provider, from said computer system, on one or more electronic means, information about the partially or fully determined locations and/or attractions in relation to dates; and/or (3) automatically adapting said offering information based on the information of step (2); and/or (4) providing analysis of information of step (2) as received from multiple uses of the computer assisted organizing of an event methods and/or (5) automated generating of new combinations of locations, attractions and dates, based on said analysis as provided in step (4).
